Europäisches Patentamt

European Patent Office

Office européen des brevets

(19)

(11) Veröffentlichungsnummer : **0 110 270**
**B1**

(12) # EUROPÄISCHE PATENTSCHRIFT

(45) Veröffentlichungstag der Patentschrift :
15.04.87

(21) Anmeldenummer : 83111584.5

(22) Anmeldetag : 19.11.83

(51) Int. Cl.⁴ : **B 62 D 55/10**, B 60 K 17/00

(54) **Fahrzeugrahmen, insbesondere für ein Gleiskettenfahrzeug, und Getriebe hierfür.**

(30) Priorität : 26.11.82 US 444922

(43) Veröffentlichungstag der Anmeldung :
13.06.84 Patentblatt 84/24

(45) Bekanntmachung des Hinweises auf die Patenterteilung : 15.04.87 Patentblatt 87/16

(84) Benannte Vertragsstaaten :
DE FR GB IT SE

(56) Entgegenhaltungen :
DE-A- 2 406 330
US-A- 2 002 474
US-A- 2 683 634
US-A- 3 645 350
US-A- 3 871 462
US-A- 4 276 952
Patent Abstracts of Japan Band 5, Nr. 72, 14 mai 1981

(73) Patentinhaber : DEERE & COMPANY
1 John Deere Road
Moline Illinois 61265 (US)

(72) Erfinder : Keenan, Thomas Francis
4847 Embassy Ct.
Dubuque Iowa 52001 (US)
Erfinder : Kass, John Joseph
1320 Oeth Ct.
Dubuque Iowa 52001 (US)

(74) Vertreter : Gramm, Werner, Prof. Dipl.-Ing. et al
Patentanwälte Gramm + Lins Theodor-Heuss-Strasse 2
D-3300 Braunschweig (DE)

**Beschreibung**

Die Erfindung betrifft einen Fahrzeugrahmen, insbesondere für ein Gleiskettenfahrzeug, bestehend aus einer vorderen Rahmensektion zur Aufnahme u. a. eines Motors und aus einer hinteren Rahmensektion, die ein Rahmengehäuse zur Aufnahme eines Schaltgetriebes aufweist ; innerhalb des Rahmengehäuses sind in der Nähe seiner in Fahrtrichtung vorderen Stirnwand im unteren Bereich vordere Befestigungsstellen vorgesehen, an denen jeweils das eine Ende von in Längsrichtung, horizontal und parallel zueinander ausgerichteten Führungsstangen befestigt ist ; hinter diesen Befestigungsstellen sind im oberen und unteren Bereich des Rahmengehäuses hintere Befestigungsstellen fest angeordnet ; das Schaltgetriebe ist auf den Führungsstangen verschieb- und herausziehbar geführt und in seiner Arbeitsstellung lösbar an den hinteren Befestigungsstellen befestigt ; die rückwärtige Stirnwand des Getriebegehäuses weist einen dieses Gehäuse nach oben überragenden Abschnitt auf, in dem die Mittel zur Befestigung des Schaltgetriebes an den oberen hinteren Befestigungsstellen des Rahmengehäuses vorgesehen sind.

Bei Geländefahrzeugen muß das Schaltgetriebe häufig weit entfernt von einer Servicestation gewartet werden. Dies bedeutet meist einen Ausbau des Schaltgetriebes aus dem Fahrzeug. Zur Verbesserung der Servicefreundlichkeit wird daher das Schaltgetriebe im hinteren Teil des Fahrzeugs angeordnet.

Die eingangs erläuterte Ausführungsform läßt sich der US-A-4 276 952 entnehmen. Hier liegen die hinteren Befestigungsstellen zur Festlegung des Schaltgetriebes außerhalb des Innenraumes des Rahmengehäuses in dessen hinterem, die Einschuböffnung für das Schaltgetriebe begrenzenden Randbereich. Die beiden Führungsstangen sind beidseitig des Schaltgetriebes angeordnet und auch an ihren hinteren Enden an der rückseitigen Wandung des Rahmengehäuses befestigt. Das Schaltgetriebe weist an seiner in Fahrtrichtung vorn liegenden Stirnseite zwei seitlich abstehende Rollen auf, mit denen das Schaltgetriebe auf den genannten Führungsstangen aufliegt bzw. zwischen diesen Führungsstangen hängt. Das Schaltgetriebe weist annähernd runden Querschnitt auf und ist in eine runde Öffnung in der rückseitigen Wandung des Rahmengehäuses eingeschoben, liegt mit einem Ringflansch gegen diese Wandung an und ist mit dieser über den Umfang des Ringflansches mehrfach verschraubt. Die vordere Stirnwandung des Schaltgetriebes liegt mit lichtem Abstand hinter der vorderen Stirnwand des Rahmengehäuses.

Als nachteilig bei dieser vorbekannten Ausführungsform ist anzusehen, daß das Schaltgetriebe angenähert kreisrund baut und daher eine verhältnismäßig große Bauhöhe erfordert. Auch die seitliche Anordnung der Führungsstangen erfordert zusätzlichen Raumbedarf. Die vorgesehene Rollenführung gewährleistet nur eine exakte Führung und Lagerung des Schaltgetriebes lotrecht nach unten und quer zur Verschiebungsrichtung in einer horizontalen Ebene ; ein Abheben der Rollen von den Führungsstangen nach oben ist nicht ausgeschlossen. Eine Anordnung eines Lenkungsgetriebes innerhalb des gleichen Rahmengehäuses ist nicht vorgesehen und erscheint auch nicht möglich.

Der Erfindung liegt die Aufgabe zugrunde, den eingangs erläuterten Fahrzeugrahmen so weiterzuentwickeln, daß sein Rahmengehäuse zur Aufnahme eines flachbauenden Schaltgetriebes geeignet ist, das mit einem ebenfalls im Rahmengehäuse vorzusehenden Lenkungsgetriebe kuppelbar, dennoch aber in einfacher Weise ausbaubar sein soll.

Diese Aufgabe wird gemäß der Erfindung durch folgende Merkmale gelöst :

a) Die hinteren Befestigungsstellen sind im Inneraum des Rahmengehäuses angeordnet ;

b) die Führungsstangen sind nur an ihrem vorderen Ende festgelegt ;

c) die vordere Stirnwand des Getriebegehäuses weist einen dieses Gehäuse nach unten überragenden Abschnitt auf, in dem den Führungsstangen zugeordnete Gleitöffnungen vorgesehen sind ;

d) im Rahmengehäuse ist vor dem Schaltgetriebe ein Lenkungsgetriebe angeordnet ;

e) das Schaltgetriebe weist eine in der vorderen und rückwärtigen Stirnwand des Getriebegehäuses horizontal gelagerte Eingangswelle und Ausgangswelle auf, die über ein Untersetzungsgetriebe miteinander in Verbindung stehen, wobei die Ausgangswelle über eine Kupplung mit dem Lenkungsgetriebe verbunden ist, so daß sich das Lenkungsgetriebe in einfacher Weise vom Schaltgetriebe entkuppeln und letzteres leicht aus dem Rahmengehäuse herausziehen läßt ;

f) das Schaltgetriebe ist ein flach ausgebildetes Schaltgetriebe, das mehrere, in einer gemeinsamen Horizontalebene liegende Getriebewellen aufweist ;

g) das Rahmengehäuse ist rückwärtig durch einen lösbaren Deckel verschlossen.

Die Begriffe « vorn » und « hinten » werden immer bezogen auf das entsprechende Fahrzeug bzw. auf dessen Hauptfahrrichtung verwendet.

Da alle Befestigungsstellen im Innenraum des Rahmengehäuses angeordnet sind, kann das Rahmengehäuse rückwärtig durch den genannten lösbaren Deckel verschlossen sein. Dadurch kann der Innenraum des Rahmengehäuses für ein hydraulisches Fahrzeugsystem als Sumpf dienen, so daß das Getriebegehäuse seinerseits nicht allseits geschlossen sein muß. Hierdurch ergeben sich Gewichts- und Kühlungsvorteile. Die Anordnung der Befestigungsstellen führen in Verbindung mit der Schiebeführung

2

zu einer sehr exakten, vor allem aber jederzeit reproduzierbaren Positionierung des Schaltgetriebes innerhalb des Rahmengehäuses. Dadurch können hydraulische Zuleitungen unmittelbar durch fest im Rahmengehäuse angeordnete Verteiler geführt werden. Die beanspruchte Anordnung der Getriebewellen führt zu einer flachen Ausbildung des Schaltgetriebes, wobei die Führungsstangen besonders raumsparend angeordnet sind, gleichzeitig aber eine Fixierung des Schaltgetriebes auch nach oben sichern. Das Lenkungsgetriebe ist vor dem Schaltgetriebe angeordnet, wobei die zwischen beiden Getriebeeinheiten angeordnete Kupplung einen leichten Ausbau des Schaltgetriebes ermöglicht.

Dabei ist es zweckmäßig, wenn an der vorderen Stirnwand des Getriebegehäuses im Abstand voneinander zwei nach vorn ragende Haltearme mit miteinander fluchtenden Bohrungen befestigt sind, in denen quer zum Getriebegehäuse eine Nabe drehbar gelagert ist, die eine Keilnutenbohrung aufweist und drehfest mit einem Kegelzahnrad verbunden ist, das ständig mit einem auf der Ausgangswelle sitzenden Kegelritzel kämmt, wobei in die genannte Keilnutenbohrung zumindest eine mit einer äußeren Keilverzahnung versehene Lenkwelle längsverschiebbar eingreift, die herausziehbar angeordnet ist und mit Lenkmitteln in Verbindung steht.

Ferner ist es vorteilhaft, wenn in die Keilnutenbohrung mit jeweils einem Ende zwei Lenkwellen eingeschoben sind, deren anderen Enden zum Fahrantrieb und zur wahlweisen Lenkung durch zwei Kupplungen wahlweise mit zwei Antrieben verbunden werden.

Bei Verwendung eines Hydraulikgetriebes ist es vorteilhaft, wenn das Rahmengehäuse durch längsverlaufende, vertikale Trennwände in drei Gehäuseräume unterteilt ist, von denen der mittlere Gehäuseraum zur Aufnahme des Schaltgetriebes dient, die Führungsstangen aufweist, einen Sumpf für Hydraulikflüssigkeit bildet und mit Öffnungen für die Zufuhr von Hydraulikflüssigkeit versehen ist.

Weitere Merkmale der Erfindung sind Gegenstand weiterer Unteransprüche und werden anhand eines Ausführungsbeispieles näher erläutert.

In der Zeichnung ist eine als Beispiel dienende Ausführungsform der Erfindung dargestellt. Es zeigen :

Figur 1 schematisch in Seitenansicht ein als Vorderlader ausgebildetes Gleiskettenfahrzeug ;

Figur 2 in Explosionsdarstellung und vergrößertem Maßstab die hintere Rahmensektion des Fahrzeugrahmens des in Figur 1 dargestellten Fahrzeuges zusammen mit dem aufzunehmenden Schaltgetriebe ;

Figur 3 einen Schnitt gemäß der Linie 3-3 in Figur 2 ;

Figur 4 in schematischer Darstellung einen Horizontalschnitt durch das Schaltgetriebe und

Figur 5 eine Teilrückansicht des in das Rahmengehäuse gemäß Figur 2 eingebauten Schaltgetriebes.

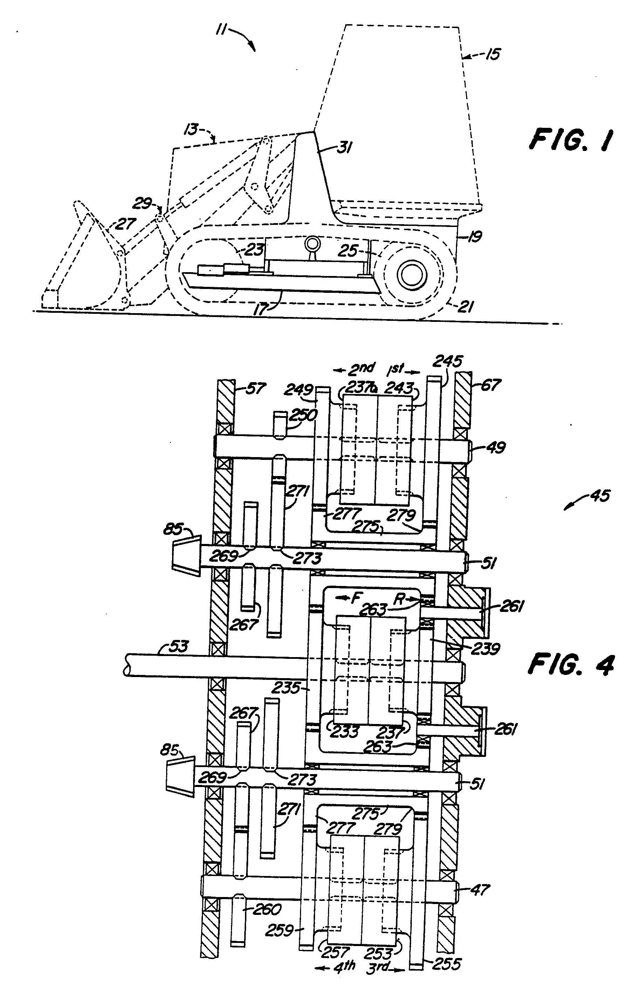

Das in Figur 1 dargestellte Gleiskettenfahrzeug 11 weist einen Motorraum 13 auf, hinter dem ein Führerhaus 15 auf einem Fahrzeugrahmen angeordnet ist, der auf einer vorderen Rahmensektion 17 und einer hinteren Rahmensektion 19 besteht. Das Fahrzeug läuft auf endlosen Ketten 21, die um vordere Kettenräder 23 und hintere angetriebene Kettenräder 25 geführt sind. Eine Schaufel 27 ist an einer Vorrichtung 29 befestigt, die ihrerseits an einem Turmgerüst 31 des vorderen Rahmenabschnitts sitzt.

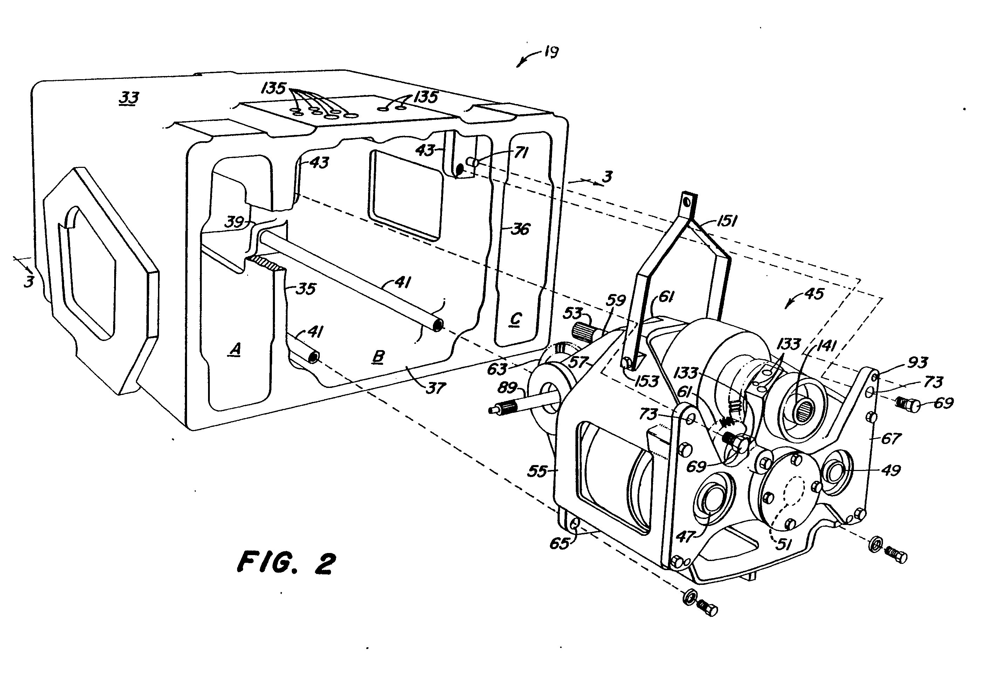

Gemäß Figur 2 besteht die hintere Rahmensektion 19 aus einem Rahmengehäuse 33 mit einer offenen rückwärtigen Stirnseite. In dem Rahmengehäuse 33 sind zwei in Längsrichtung angeordnete, vertikale Trennwände 35, 36 vorgesehen, die den Gehäuseinnenraum in drei quer nebeneinanderliegende Gehäuseräume A, B und C unterteilt. Im mittleren Gehäuseraum B sind im vorderen Bereich, bezogen auf das Fahrzeug, in der Nähe des Gehäusebodens 37 vordere Befestigungsstellen 39 vorgesehen, an denen mit ihrem einen Ende Führungsstangen 41 eingespannt sind, die in Längsrichtung nach hinten ragen und parallel zueinander ausgerichtet sind. Im hinteren oberen Bereich des Gehäuseinnenraumes sind hintere Befestigungswandungen 43 vorgesehen.

Der mittlere Gehäuseraum B dient zur Aufnahme eines Schaltgetriebes 45, das sich in erster Linie durch eine besonders flache Bauweise auszeichnet. Zur Erzielung dieser flachen Bauweise weist das Schaltgetriebe 45 mehrere Wellen 47, 49, 51 auf, die in Längsrichtung und parallel zueinander angeordnet sind und alle in einer gemeinsamen Horizontalebene liegen, wobei eine Ausgangswelle 51 zwischen zwei Getriebewellen 47, 49 liegt. Eine Eingangswelle 53 liegt oberhalb und parallel zu der Ausgangswelle 51. Die Wellen 47, 49, 51, 53 sind in dem Getriebegehäuse 55 drehbar zwischen der vorderen Stirnwand 57 und der hinteren Stirnwand 67 gelagert.

Die vordere Stirnwand 57 weist zwei im Abstand voneinander nach vorn ragende Haltearme 59, 61 auf, die mit miteinander fluchtenden Bohrungen versehen sind, zwischen denen ein später noch im einzelnen beschriebenes Zahnkranzgetriebe 63 angeordnet ist. Ferner weist die vordere Stirnwand 57 des Getriebegehäuses 55 einen nach unten gezogenen Abschnitt auf, in dem den Führungsstangen 41 zugeordnete Gleitöffnungen 65 vorgesehen sind, von denen nur eine dargestellt ist. Die rückwärtige Stirnwand 67 des Getriebegehäuses 55 weist einen nach oben gezogenen Abschnitt auf, in dem im Abstand voneinander mehrere Öffnungen bzw. Bohrungen 73 angeordnet sind. Das Schaltgetriebe 45 ist auf den Führungsstangen 41 verschieb- und herausziehbar geführt und in seiner Arbeitsstellung lösbar an den hinteren Befestigungswandungen 43 befestigt beispielsweise durch Schrauben 69. Zur Justierung des Schaltgetriebes 45 gegenüber dem Rahmengehäuse 33 trägt eine hintere Befestigungswandung 43 einen Zentrierstift 71, dem in der rückwärtigen Stirnwand 67 des Getriebegehäuses 55 eine Zentrierbohrung 93 zugeordnet ist. Ebenfalls zur Zentrierung des Getriebes 45 gegenüber dem Rahmengehäuse 33 ist es zweckmäßig, wenn die Führungsstangen 41 konisch ausgebildet sind, wobei die Führungsstangen dann fest von den zugeordneten Gleitöffnungen 65 umschlossen sind, wenn der Zentrierstift 71 vollständig in die ihm zugeordnete Zentrierbohrung 93 eingeführt ist.

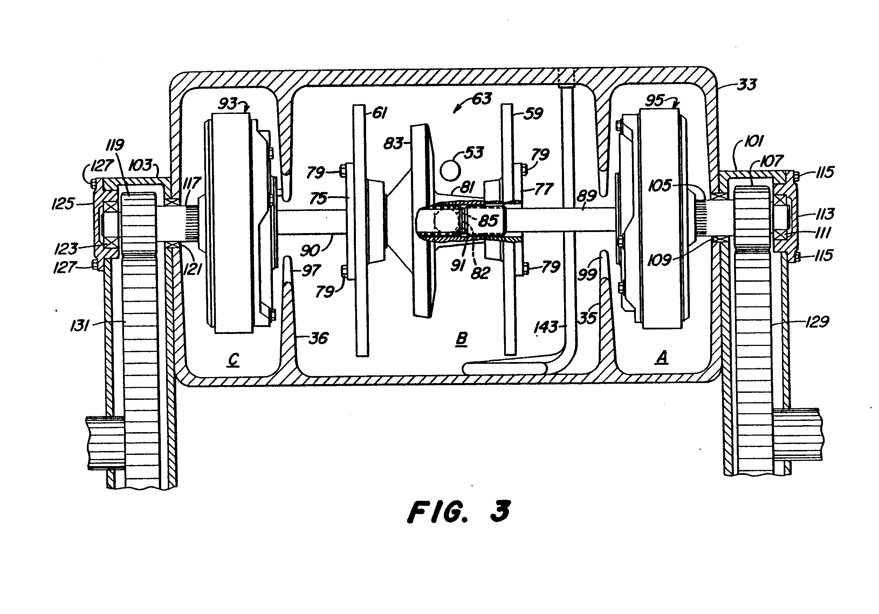

Gemäß Figur 3 umfasst das Zahnkranzgetriebe 63 erste und zweite Abdeckungen 75, 77, die in den Ausnehmungen der genannten Haltearme 59, 61 beispielsweise durch Schrauben 79 festgelegt sind. Eine Nabe 81 ist fest mit einem Kegelzahnradkranz 83 verbunden und ist drehbar zwischen in den Abdeckungen 75, 77 vorgesehenen Lagerungen gelagert. Ein Kegelradritzel 85 kämmt ständig mitdem Kegelzahnradkranz 83 und sitzt fest auf der Ausgangswelle 51 des Schaltgetriebes 45. Lenkwellen 89, 90 sind von beiden Seiten in die Nabe 81 gesteckt, liegen fluchtend bei 82 gegeneinander an und stehen mit der Nabe 81 bei 91 über eine Keilnutverzahnung in Drehverbindung. Das andere Ende der Lenkwelle 90 führt in eine konventionelle Lenk-Bremskupplung 93, die im Gehäuseraum C des Rahmengehäuses 33 gelagert ist, während das andere Ende der Lenkwelle 89 zu einer zweiten üblichen Bremskupplung 95 führt, die in dem Gehäuseraum A angeordnet ist. Dabei erstrecken sich die Lenkwellen 89, 90 durch Öffnungen 99, 97 in den Trennwandungen 35, 36.

Auf den beiden Seiten des Rahmengehäuses 33 ist jeweils ein mit diesem fest verbundenes Achsentriebgehäuse 101, 103 vorgesehen. Eine Welle 105 steht in Drehverbindung mit der Bremskupplung 95, ragt von dieser in das Achsentriebgehäuse 101, trägt drehfest ein in dem genannten Gehäuse 101 angeordnetes Zahnrad 107 und ist in dem genannten Gehäuse 101 in Lagern 109, 111 gelagert. Ein Montagedeckel 113 nimmt das Lager 111 auf und ist lösbar am Achsentriebgehäuse 101 über Bolzen 115 befestigt, so daß nach einem Abbau des Montagedeckels 113 die Welle 105 mit ihrem Zahnrad 107 herausgezogen werden kann. Die Welle 117 steht in gleicher Weise in Drehverbindung mit der Bremskupplung 93, ragt in das Achsentriebgehäuse 103, ist dort in Lagern 121, 123 gelagert und trägt drehfest ein Zahnrad 119. Ein Montage-deckel 125 nimmt das Lager 123 auf und ist lösbar an dem Achsentriebgehäuse 103 über Schraubbolzen 127 befestigt, so daß nach Entfernung des Montagedeckels die Welle 117 mit ihrem Zahnrad 119 herausgezogen werden kann. Die Zahnräder 107 und 119 kämmen mit Achszahnrädern 129, 131, die in den Achsentriebgehäusen 101, 103 drehbar gelagert sind und mit den angetriebenen Kettenrädern 25 in Verbindung stehen.

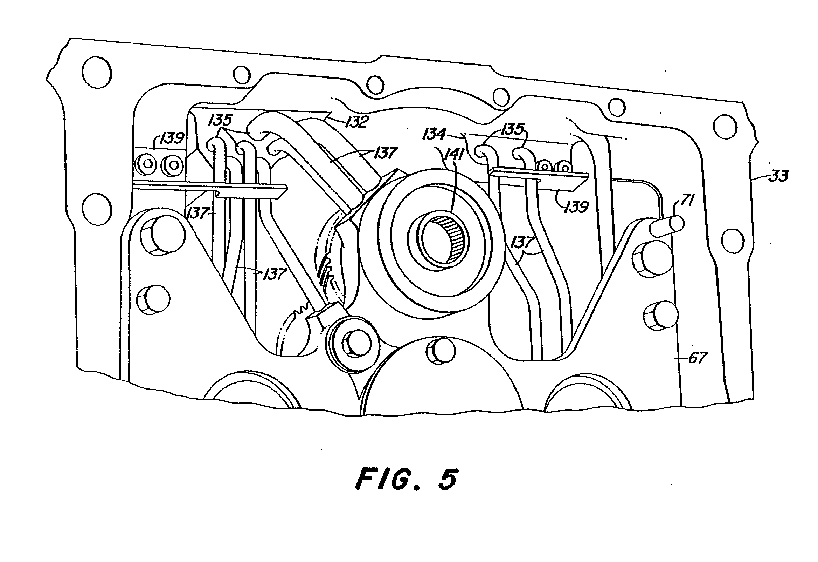

Figur 4 zeigt das flach bauende Schaltgetriebe 45. Aus Gründen der besseren Übersichtlichkeit sind einige Teile dieses Getriebes entgegen ihrer tatsächlichen Anordnung dargestellt. Es handelt sich um ein Schaltgetriebe mit vier Vorwärts- und vier Rückwärtsgängen. Die Eingangswelle 53 ist zwischen der vorderen und rückwärtigen Stirnwand 57, 67 drehbar gelagert. Eine herkömmliche Vorwärtsschaltkupplung 233 ist auf der Eingangswelle 53 montiert und ist kuppelbar mit einem Zahnrad 235, das frei drehbar auf der Eingangswelle 53 sitzt und über die Kupplung wahlweise mit dieser Eingangswelle 53 verbunden werden kann. Eine herkömmliche Rückwärtsschaltkupplung 237 kann mit einem ebenfalls auf der Eingangswelle 53 frei drehbaren Zahnrad 239 gekuppelt werden. Die Getriebewelle 49 weist eine erste konventionelle Schaltkupplung 243 auf, durch die ein frei drehbar auf der Welle 49 gelagertes Zahnrad 245 mit dieser Welle 49 gekuppelt werden kann. Die Getriebewelle 49 weist noch eine zweite herkömmliche Schaltkupplung 237a auf, über die ein Zahnrad 249 mit der Getriebewelle 49 gekuppelt werden kann. Auf der ersten Getriebewelle 49 sitzt drehfest ein Zahnrad 250. Eine dritte herkömmliche Schaltkupplung 253 kann wahlweise ein Zahnrad 255 mit der Getriebewelle 47 kuppeln, während eine vierte herkömmliche Schaltkupplung 257 ein Zahnrad 259 mit der Getriebewelle 47 kuppeln kann. Die zweite Getriebewelle 47 trägt ferner drehfest ein Zahnrad 260. Außerdem ist an der rückwärtigen Stirnwand 57 eine Leerlaufwelle 261 befestigt, die aus Gründen der besseren Übersichtlichkeit in zwei verschiedenen Stellungen dargestellt ist. Die Leerlaufwelle 261 trägt frei drehbar ein einzelnes Zahnrad 263, das ständig mit dem Zahnrad 239 kämmt. Die ebenfalls aus Gründen der besseren Übersichtlichkeit in zwei verschiedenen Stellungen dargestellte Ausgangswelle 51 trägt drehfest bei 269 ein erstes Zahnrad 267, das ständig mit dem Zahnrad 260 kämmt und außerdem ein zweites Zahnrad 271, das bei 273 drehfest mit der Ausgangswelle 51 verbunden ist und ständig mit dem Zahnrad 250 kämmt. Ein Doppelzahnrad 275 ist frei drehbar auf der Ausgangswelle 51 angeordnet und weist ein erstes, ständig mit den Zahnrädern 249, 235 und 259 kämmendes Zahnrad 277 sowie ein zweites, ständig mit den Zahnrädern 245, 255 und 263 kämmendes Zahnrad 279 auf. Die Ausgangswelle 51 ragt über die vordere Stirnwand 57 des Getriebegehäuses 55 hinaus und trägt außerhalb dieses Gehäuses drehfest das Kegelradritzel 85. Die folgende Tabelle I gibt die jeweiligen Schaltstellungen an :

Tabelle I

Vorwärts

Drehzahlbereich

| | | | | | |
|---|---|---|---|---|---|
| 1.: | 235/277 | 277-279 | 279/245 | 245-250 | 250/271 |
| 2.: | 235/277 | 277/249 | – | 249-250 | 250/271 |
| 3.: | 235/277 | 277/279 | 279/255 | 255-260 | 260/267 |
| 4.: | 235/277 | 277/259 | – | 259-260 | 260/267 |

**0 110 270**

Rückwärts

| | | | | | | |
|---|---|---|---|---|---|---|
| 1.: | 239/263 | 263/279 | – | 279/245 | 245–250 | 250/271 |
| 2.: | 239/263 | 263/279 | 279–277 | 277/249 | 249/250 | 250/271 |
| 3.: | 239/263 | 263/279 | – | 279/255 | 255/260 | 260/267 |
| 4.: | 239/263 | 263/279 | 279–277 | 277/259 | 259/260 | 260/267 |

Das dargestellte Schaltgetriebe 45 erfordert keinerlei Nebenwellen, Vorgelege o. dgl., wie sie meist bei Getrieben für Geländefahrzeuge erforderlich sind.

Gemäß den Figuren 2 und 5 weist die rückwärtige Stirnwand 67 des Getriebegehäuses 55 mehrere Öffnungen 133 auf (von denen nur einige dargestellt sind) für die Zufuhr von Hydraulikflüssigkeit zu den Schaltkupplungen sowie zu den Wellen für deren Schmierung. Die obere Abdeckung des Rahmengehäuses 33 ist ebenfalls mit einer Vielzahl von Öffnungen 135 versehen, die zu Verteilern 132, 134 führen, an die Leitungen 137 angeschlossen sind, deren anderen Enden an eine Öffnungen 133 angeschlossen sind. Halterungen 139 sind lösbar am Verteiler 134 angebracht, um die Leitungen 137 festzuhalten. In gleicher Weise ist ein zweiter Halter 139 lösbar an einer Montagewandung 43 vorgesehen, um die Leitungen 137 festzuhalten. Zur Zufuhr der Hydraulikflüssigkeit zu den Öffnungen 135 können übliche Mittel vorgesehen werden.

Eine herkömmliche Zapfwellenkupplung 141 ist mit der Eingangswelle 53 verbunden und drehbar in der rückwärtigen Stirnwand 67 gelagert. Der mittlere Gehäuseraum B kann für das hydraulische Fahrzeugsystem als Sumpf dienen, wobei in den Gehäuseraum B gemäß Figur 3 eine Rücklaufleitung 143 münden kann ; zum Verschließen des Rahmengehäuses 33 ist ein in der Zeichnung nicht dargestellter, die Gehäuseräume A, B und C abdeckender, lösbarer Gehäusedeckel vorgesehen, der eine Öffnung zum Durchtritt für die Zapfwellenkupplung 141 aufweist. Das Getriebegehäuse 55 kann für die Hydraulikflüssigkeit einen Überlauf bilden, so daß die Hydraulikflüssigkeit in den beispielsweise durch den Gehäuseraum B gebildeten Sumpf zurückfließen kann.

Zum Ausbau des Schaltgetriebes 45 aus dem Rahmengehäuse 33 wird der genannte, in der Zeichnung aber nicht dargestellte rückwärtige Deckel entfernt. Außerdem werden die Montagedeckel 113, 125 entfernt, so daß sich die Wellen 89, 90, 105 und 117 aus dem Rahmengehäuse 33 herausziehen lassen. Die Halterungen 139 können dann entfernt werden, damit die Leitungen 137 von den Anschlüssen bzw. Öffnungen 135 abgezogen werden können. Durch Abschrauben der Schraubbolzen 69 läßt sich dann das Schaltgetriebe 45 auf den Führungsstangen 41 aus dem Rahmengehäuse 33 herausziehen, wobei zur Unterstützung eine am Schaltgetriebe 45 bei 153 befestigte übliche Tragvorrichtung 151 vorgesehen sein kann.

**Patentansprüche**

1. Fahrzeugrahmen, insbesondere für ein Gleiskettenfahrzeug, bestehend aus einer vorderen Rahmensektion (17) zur Aufnahme u. a. eines Motors und aus einer hinteren Rahmensektion (19), die ein Rahmengehäuse (33) zur Aufnahme eines Schaltgetriebes (45) aufweist ; innerhalb des Rahmengehäuses (33) sind in der Nähe seiner in Fahrtrichtung vorderen Stirnwand im unteren Bereich vordere Befestigungsstellen (39) vorgesehen, an denen jeweils das eine Ende von in Längsrichtung, horizontal und parallel zueinander ausgerichteten Führungsstangen (41) befestigt ist ; hinter diesen Befestigungsstellen (39) sind im oberen und unteren Bereich des Rahmengehäuses (33) hintere Befestigungsstellen (43, 71) fest angeordnet ; das Schaltgetriebe (45) ist auf den Führungsstangen (41) verschieb- und herausziehbar geführt und in seiner Arbeitsstellung lösbar an den hinteren Befestigungsstellen (39) befestigt ; die rückwärtige Stirnwand (67) des Getriebegehäuses (55) weist einen dieses Gehäuse nach oben überragenden Abschnitt auf, in dem die Mittel (69, 73) zur Befestigung des Schaltgetriebes (45) an den oberen hinteren Befestigungsstellen (43, 71) des Rahmengehäuses (33) vorgesehen sind ; gekennzeichnet durch folgende Merkmale :

a) die hinteren Befestigungsstellen (43, 71) sind im Innenraum des Rahmengehäuses (33) angeordnet ;

b) die Führungsstangen (41) sind nur an ihrem vorderen Ende festgelegt ;

c) die vordere Stirnwand (57) des Getriebegehäuses (55) weist einen dieses Gehäuse nach unten überragenden Abschnitt auf, in dem den Führungsstangen (41) zugeordnete Gleitöffnungen (65) vorgesehen sind ;

d) im Rahmengehäuse (33) ist vor dem Schaltgetriebe (45) ein Lenkungsgetriebe angeordnet ;

e) das Schaltgetriebe (45) weist eine in der vorderen und rückwärtigen Stirnwand (57, 67) des Getriebegehäuses (55) horizontal gelagerte Eingangswelle (53) und Ausgangswelle (51) auf, die über ein

5

Untersetzungsgetriebe miteinander in Verbindung stehen, wobei die Ausgangswelle (51) über eine Kupplung mit dem Lenkungsgetriebe verbunden ist, so daß sich das Lenkungsgetriebe in einfacher Weise vom Schaltgetriebe (45) entkuppeln und letzteres leicht aus dem Rahmengehäuse (33) herausziehen läßt ;

f) das Schaltgetriebe (45) ist ein flach ausgebildetes Schaltgetriebe (45), das mehrere, in einer gemeinsamen Horizontalebene liegende Getriebewellen (47, 49, 51) aufweist ;

g) das Rahmengehäuse (33) ist rückwärtig durch einen lösbaren Deckel verschlossen.

2. Fahrzeugrahmen nach Anspruch 1, dadurch gekennzeichnet, daß die Führungsstangen (41) konisch ausgebildet sind.

3. Fahrzeugrahmen nach Anspruch 1 oder 2, dadurch gekennzeichnet, daß die hinteren Befestigungsstellen (39, 43, 71) des Rahmengehäuses (33) einen Zentrierstift (71) aufweisen, dem in der rückwärtigen Stirnwand (67) des Getriebegehäuses (55) eine Zentrierbohrung (93) zugeordnet ist.

4. Fahrzeugrahmen nach einem der vorhergehenden Ansprüche, dadurch gekennzeichnet, daß an der vorderen Stirnwand (57) des Getriebegehäuses (55) im Abstand voneinander zwei nach vorn ragende Haltearme (59, 61) mit miteinander fluchtenden Bohrungen befestigt sind, in denen quer zum Getriebegehäuse (55) eine Nabe (81) drehbar gelagert ist, die eine Keilnutenbohrung aufweist und drehfest mit einem Kegelzahnrad (83) verbunden ist, das ständig mit einem auf der Ausgangswelle (51) sitzenden Kegelritzel (85) kämmt, wobei in die genannte Keilnutenbohrung zumindest eine mit einer äußeren Keilverzahnung versehene Lenkwelle (89, 90) längsverschiebbar eingreift, die herausziehbar angeordnet ist und mit Lenkmitteln in Verbindung steht.

5. Fahrzeugrahmen nach Anspruch 4, dadurch gekennzeichnet, daß in die Keilnutenbohrung mit jeweils einem Ende zwei Lenkwellen (89, 90) eingeschoben sind, deren anderen Enden zum Fahrantrieb und zur wahlweisen Lenkung durch zwei Lenkkupplungen (93, 95) wahlweise mit zwei Antrieben (107 bis 131) verbunden werden.

6. Fahrzeugrahmen nach einem der vorhergehenden Ansprüche, dadurch gekennzeichnet, daß das Rahmengehäuse (33) durch längsverlaufende, vertikale Trennwände (35, 36) in drei Gehäuseräume (A, B, C) unterteilt ist, von denen der mittlere Gehäuseraum (B) zur Aufnahme des Schaltgetriebes (45) dient, die Führungsstangen (41) aufweist, einen Sumpf für Hydraulikflüssigkeit bildet und mit Öffnungen (135) für die Zufuhr von Hydraulikflüssigkeit versehen ist.

7. Fahrzeugrahmen nach Anspruch 5 oder 6, gekennzeichnet durch folgende Merkmale :

a) Die genannten Lenkkupplungen (93, 95) sind Brems-Lenk-Kupplungen, die jeweils am einen Ende der beiden Lenkwellen (89, 90) angeschlossen und jeweils in einem Gehäuseraum (A bzw. C) angeordnet sind ;

b) die beiden Lenkwellen (89, 90) ragen jeweils durch eine Öffnung (97, 99) in den Trennwänden (35, 36) ;

c) an der Seitenwand des Rahmengehäuses (33) ist außen jeweils ein Achsentriebgehäuse (101, 103) befestigt, das jeweils mehrere Zahnräder (107, 129, 119, 131) umschließt, von denen jeweils eines (107, 119) drehfest auf je einer Welle (105, 117) sitzt, die drehbar im Achsentriebgehäuse (101, 103) gelagert und an die entsprechende Lenkkupplung (93, 95) angeschlossen sind ;

d) jedes Achsentriebgehäuse (101, 103) weist einen lösbar befestigten Montagedeckel (113, 125) auf, der in geöffneter Stellung ein Herausziehen der genannten Wellen (105, 117) mit dem genannten Zahnrad (107, 119) ermöglicht ; und

e) jedes Achsentriebgehäuse (101, 103) weist außerdem eine angetriebene Welle auf, die drehbar im Achsentriebgehäuse gelagert ist, aus diesem herausragt und mit den Zahnrädern (107, 129, 119, 131) des Achsentriebgehäuses in Drehverbindung steht.

8. Fahrzeugrahmen nach einem der Ansprüche 4, 5, 6 oder 7, gekennzeichnet durch folgende Merkmale des Schaltgetriebes (45) :

a) Auf der Ausgangswelle (51) sitzen drehfest ein erstes und zweites Zahnrad (271, 267) innerhalb des Getriebegehäuses (55), während das drehfest auf der Ausgangswelle (51) sitzende Kegelritzel (85) außerhalb des Getriebegehäuses (55) vor deren vorderer Stirnwand (57) liegt ;

b) in der vorderen und rückwärtigen Stirnwand (57, 67) des Getriebegehäuses (55) ist eine erste Getriebewelle (49) drehbar gelagert, auf der drehfest ein ständig mit dem ersten Zahnrad (271) kämmendes drittes Zahnrad (250) sitzt und mehrere vierte Zahnräder (245, 249) frei drehbar angeordnet sind, von denen wahlweise eines durch eine erste Kupplung (243) mit der ersten Getriebewelle (49) kuppelbar ist ;

c) in der vorderen und rückwärtigen Stirnwand (57, 67) des Getriebegehäuses (55) ist eine zweite Getriebewelle (47) drehbar gelagert, auf der drehfest ein ständig mit dem zweiten Zahnrad (267) kämmendes fünftes Zahnrad (260) sitzt und mehrere sechste Zahnräder (255, 259) frei drehbar angeordnet sind, von denen wahlweise eines durch eine zweite Kupplung (253) mit der zweiten Getriebewelle (47) kuppelbar ist ;

d) die Ausgangswelle (51) sowie die beiden Getriebewellen (47, 49) liegen parallel zueinander in einer gemeinsamen horizontalen Ebene ;

6

**0 110 270**

e) in der vorderen und rückwärtigen Stirnwand (57, 67) des Getriebegehäuses (55) ist eine Eingangswelle (53) drehbar gelagert, auf der ein siebtes und ein achtes Zahnrad (235, 239) frei drehbar gelagert sind, die über Kupplungen (233, 237) wahlweise mit der Eingangswelle (53) kuppelbar sind ;

f) eine Leerlaufwelle (261) ist im Getriebegehäuse (55) festgelegt und trägt frei drehbar ein ständig mit dem achten Zahnrad (239) kämmendes neuntes Zahnrad (263) ; und

g) auf der Ausgangswelle (51) sitzt frei drehbar eine Buchse (275) mit mehreren zehnten Zahnrädern (277, 279), von denen jedes ständig mit einem Zahnrad der vierten und sechsten Zahnräder (245, 249, 255, 259) kämmt, während zusätzlich eines (277) ständig mit dem siebten Zahnrad (235) und ein anderes (279) ständig mit dem neunten Zahnrad (263) kämmen.

9. Fahrzeugrahmen nach Anspruch 6, 7 oder 8, dadurch gekennzeichnet, daß die in der oberen Wandung des Rahmengehäuses (33) vorgesehenen Öffnungen (135) für die Hydraulikflüssigkeit einerseits mit einer Hydraulikflüssigkeitszufuhr und andererseits mit in der rückwärtigen Stirnwand (67) des Getriebegehäuses (55) vorgesehenen Anschlüssen (133) in Verbindung stehen, von wo Leitungen (137) über Verteiler (132, 134) zu den Kupplungen (233 bis 257) und anderen Stellen des Schaltgetriebes (45) führen, und daß vom Getriebegehäuse (55) eine Rücklaufleitung (143) in den mittleren Gehäuseraum (B) geführt ist.

## Claims

1. A vehicle frame, especially for a crawler tractor, comprising a front frame section (17) for containing amongst others an engine, and comprising a rear frame section (19) having a frame housing (33) for containing a shift transmission (45) ; within said frame housing (33) forward mounting members (39) are provided in proximity of its forward wall (in driving direction) in the lower region, the one end each of guide rods (41) aligned to each other in longitudinal, horizontal and parallel direction, being fixably mounted to said mounting members ; rearward mounting members (43, 71) are fixably mounted behind said mounting members (39) in the upper and lower region of said frame housing (33) ; the shift transmission (45) is supported slidably and removably on said guide rods (41) and is, in its operating position, detachably mounted to said rearward mounting members (39) ; the rear wall (67) of the transmission casing (55) has a portion extending above said casing and comprising the means (69, 73) for mounting said shift transmission (45) to said upper rearward mounting members (43, 71) of the frame housing (33), characterized by the following features :

a) the rearward mounting members (43, 71) are located in the interior of said frame housing (33) ;

b) the guide rods (41) are fixably mounted only at their front end ;

c) the forward wall (57) of the transmission casing (55) comprises a portion extending below said casing and comprising gliding apertures (65) assigned to the guide rods (41) ;

d) in the frame housing (33) a steering transmission is positioned ahead of the shift transmission (45) ;

e) the shift transmission (45) comprises a horizontal input shaft (53) and output shaft (51) both mounted in said forward and rear walls (57, 67) of said transmission casing (55) and being in communication with each other via gear reducing means, said output shaft (51) being connected with said steering transmission via coupling means, so that said steering transmission is disengageable from the shift transmission (45) in a simple way, said shift transmission being easily retractable from the frame housing (33) ;

f) the shift transmission (45) is a low profiled shift transmission (45) having a plurality of gear shafts (47, 49, 51) arranged horizontally coplanar ;

g) the frame housing (33) is rearwardly closed by a detachable cover.

2. Vehicle frame according to claim 1, characterized in that the guide rods (41) are tapered.

3. Vehicle frame according to claim 1 or 2, characterized in that said rear mounting members (39, 43, 71) of said frame housing (33) comprise a centering pin (71), a centering bore (93) being associated to said centering pin in said rear wall (67) in said transmission casing (55).

4. Vehicle frame according to one of the preceding claims, characterized in that two spaced apart supporting arms (59, 61) are mounted to and extending forwardly of said forward wall (57) of said transmission casing (55) having bores being in alignment with each other, for rotatably mounting a hub (81) extending transversely to said transmission casing (55), having a splined bore and being fixably mounted to a bevel gear (83) which is in constant mesh with a bevel pinion (85) mounted on said output shaft (51), whereby at least one steering shaft (89, 90) carrying external splines is slidably mounted in said splined bore, can slidably be withdrawn from said bore and is communicating with steering means.

5. Vehicle frame according to claim 4, characterized in that two steering shafts (89, 90) with one end each are slidably inserted into the splined bore, their other ends being selectively connected with two actuators (107 to 131) via two steering clutching means (93, 95) for driving and selectively steering.

6. Vehicle frame according to one of the preceding claims, characterized in that the frame housing

7

(33) is divided, by longitudinally extending vertical dividing walls (35, 36) into three sections (A, B, C,), the middle section (B) serving for containing said shift transmission (45), comprising said guide rods (41), forming a sump for hydraulic fluid and having apertures (135) for the supply of hydraulic fluid.

7. Vehicle frame according to claim 5 or 6, characterized by the following features :

a) Said steering clutching means (93, 95) are brake-steering-cluthes, each being connected to one end of the two steering shafts (89, 90) and each being positioned in one housing section (A and C, resp.) ;

b) the two steering shafts (89, 90) extend through respective apertures (97, 99) in said dividing walls (35, 36) ;

c) a final drive gear housing (101, 103) is mounted externally to each of both side walls of the frame housing (33), each enclosing several gears (107, 129, 119, 131) one of which (107, 119) being fixably mounted on a respective shaft (105, 117), which is rotatably mounted in said final drive gear housing (101, 103) and coupled to the respective steering clutching means (93, 95) ;

d) each of said final drive gear housing (101, 103) has a detachably mounted installation cover (113, 125) which, in an opened position, allows said shafts (105, 117) to be retracted together with said gear (107, 119) ;

e) each of said final drive gear housing (101, 103) furthermore comprises a driven shaft rotatably mounted in said final drive gear housing, extending out of the same and being in rotational communication with the gears (107, 129, 119, 131) of said final drive gear housing.

8. Vehicle frame according to one of the claims 4, 5, 6 or 7, characterized by following features of said shift transmission (45) :

a) a first and second gear (271, 267) are fixably mounted on said output shaft (51) within the transmission casing (55) whereas said bevel pinion (85) being fixably mounted on the output shaft (51) is located outside the transmission casing (55) in front of the respective forward wall (57) ;

b) in the forward and rear wall (57, 67) of said transmission casing (55) a first gear shaft (49) is rotatably mounted carrying a third fixably mounted gear (250) being in constant mesh with said first gear (271), and a plurality of fourth gears (245, 249) freely rotatably mounted, one of which being selectively connectable with said first gear shaft (49) by means of first clutching means (243) ;

c) in the forward and rear wall (57, 67) of said transmission casing (55) a second gear shaft (47) is rotatably mounted, carrying a fifth fixably mounted gear (260) being in constant mesh with said second gear (267), and a plurality of sixth gears (255, 259) freely rotatably mounted, one of which being selectively connectable with said second gear shaft (47) by means of second clutching means (253) ;

d) said output shaft (51) as well as the two gear shafts (47, 49) extend parallelly and horizontally coplanar ;

e) in the forward and rear walls (57, 67) of said transmission casing (55) an input shaft (53) is rotatably mounted, a seventh and an eigth gear (235, 239) are freely rotatable on said input shaft and are selectively connectable to said input shaft (53) via clutching means (233, 237) ;

f) an idler shaft (261) is fixably mounted in said transmission casing (55) carrying freely rotatable a ninth gear (263) being in constant mesh with said eigth gear (239) ; and

g) on the output shaft (51) a hub (275) is freely rotatable, carrying a plurality of tenth gears (277, 279), each of said tenth gears being in constant mesh with one of said fourth and sixth gears (245, 249, 255, 259) ; one of said tenth gears (277) being additionally in constant mesh with said seventh gear (235), and another one (279) being in constant mesh with said ninth gear (263).

9. Vehicle frame according to claim 6, 7 or 8, characterized in that said apertures (135) for the hydraulic fluid which are located in the upper wall of said frame housing (33), are in communication as well with a hydraulic fluid supply as with ports (133) provided in the rear wall (67) of the transmission casing (55) ; conduits (137) connecting said ports (133) via manifolds (132, 134) to said clutching means (233 to 257) and other parts of the shift transmission (45) ; a return conduit (143) is led from the transmission casing (55) into the middle house section (B).

**Revendications**

1. Châssis de véhicule, en particulier pour véhicule à chenilles, comprenant une section de châssis avant (17) pour la réception, entre autres, d'un moteur et une section de châssis arrière (19) qui comporte un carter de châssis (33) pour la réception d'une boîte de vitesses (45), châssis dans lequel : il est prévu à l'intérieur du carter de châssis (33), au voisinage de sa paroi terminale avant dans le sens de déplacement dans la zone inférieure des points de fixation avant (39) à chacun desquels est fixée une extrémité respective de barres de guidage (41) orientées dans la direction longitudinale, horizontalement et parallèlement entre elles ; derrière ces points de fixation (39) des points de fixation arrière (43, 71) sont disposés en position fixe dans la zone supérieure et la zone inférieure du carter de châssis (33) ; la boîte de vitesses (45) est guidée sur les barres de guidage (41) de façon à pouvoir coulisser et être dégagée et est fixée, dans sa position de travail, de façon amovible aux points de fixation arrière (39) ; la paroi terminale arrière (67) du carter de boîte de vitesses (55) comporte une section dépassant vers le haut de ce carter, dans laquelle les moyens (69, 73) de fixation de la boîte de vitesses (45) aux points de fixation arrière supérieurs (43, 71) du carter de châssis (33) sont prévus ; ledit châssis étant caractérisé par les caractéristiques suivantes :

a) les points de fixation arrière (43, 71) sont placés dans la cavité intérieure du carter de châssis (33) ;

b) les barres de guidage (41) ne sont fixées qu'à leur extrémité antérieure ;

c) la paroi terminale avant (57) du carter de boîte de vitesses (55) comporte une section dépassant vers le bas de ce carter, dans laquelle des orifices de coulissement (65) conjugués aux barres de guidage (41) sont prévus ;

d) un mécanisme de direction est placé dans le carter de châssis (33) devant la boîte de vitesses (45) ;

e). la boîte de vitesses (45) comporte un arbre d'entrée (53) placé horizontalement dans la paroi terminale avant (57) et la paroi terminale arrière (67) du carter de boîte de vitesses (55) et un arbre de sortie (51), ces arbres étant reliés entre eux par un mécanisme démultiplicateur, l'arbre de sortie (51) étant relié par un embrayage au mécanisme de direction de telle façon que l'on peut désaccoupler de façon simple le mécanisme de direction de la boîte de vitesses (45) et retirer facilement cette dernière du carter de châssis (33) ;

f) la boîte de vitesses (45) est une boîte de vitesses (45) de forme plate qui comporte plusieurs arbres de transmission (47, 49, 51) placés dans un plan horizontal commun ;

g) le carter de châssis (33) est fermé postérieurement par un couvercle amovible.

2. Châssis de véhicule suivant la revendication 1, caractérisé en ce que les barres de guidage (41) ont une forme conique.

3. Châssis de véhicule suivant la revendication 1 ou 2, caractérisé en ce que les points de fixation arrière (39, 43, 71) du carter de châssis (33) comportent un ergot de centrage (71) auquel correspond dans la paroi terminale arrière (67) du carter de boîte de vitesses (55) un perçage de centrage (93).

4. Châssis de véhicule suivant l'une des revendications précédentes, caractérisé en ce que deux bras de support (59, 61), écartés l'un de l'autre, faisant saillie vers l'avant, et munis de perçages alignés entre eux, sont fixés à la paroi terminale avant (57) du carter de boîte de vitesses (55), un moyeu (81) étant monté de façon à pouvoir tourner dans ces perçages transversalement par rapport au carter de boîte de vitesses (55), ce moyeu comportant un perçage cannelé et étant angulairement solidaire d'un pignon conique (83) qui engrène de façon permanente avec un pignon conique (85) placé sur l'arbre de sortie (51), au moins un arbre de direction (89, 90) muni de cannelures extérieures étant engagé de façon à pouvoir coulisser longitudinalement dans ledit perçage cannelé, cet arbre étant disposé de façon à pouvoir être dégagé et étant relié à des organes de direction.

5. Châssis de véhicule suivant la revendication 4, caractérisé en ce que deux arbres de direction (89, 90) sont engagés chacun par une extrémité dans le perçage cannelé, leur autre extrémité étant reliée par deux embrayages de direction (93, 95) de façon sélective à deux mécanismes d'entraînement (107 à 131) en vue d'assurer la propulsion et, de façon sélective, la direction du véhicule.

6. Châssis de véhicule suivant l'une quelconque des revendications précédentes, caractérisé en ce que le carter de châssis (33) est subdivisé par des cloisons verticales (35, 36) s'étendant longitudinalement en trois chambres de carter (A, B, C), parmi lesquelles la chambre de carter centrale (B) sert à recevoir la boîte de vitesses (45), comporte les barres de guidage (41), forme un réservoir ou bac destiné au liquide hydraulique et comporte des orifices (135) pour l'admission de liquide hydraulique.

7. Châssis de véhicule suivant la revendication 5 ou 6, caractérisé par les caractéristiques suivantes :

a) les embrayages de direction (93, 95) précités sont des embrayages de freinage-direction qui sont raccordés chacun à une extrémité des deux arbres de direction (89, 90) et sont disposés chacun dans une chambre de carter respective (A, respectivement C) ;

b) les deux arbres de direction (89, 90) font saillie chacun à travers un orifice (97, 99), ces orifices étant prévus dans les cloisons (35, 36) ;

c) des carters de mécanisme d'entraînement d'essieu (respectivement, 101, 103) sont fixés extérieurement chacun à la paroi latérale du carter de châssis (33), chacun de ces carters renfermant plusieurs pignons (107, 129, 119, 131) parmi lesquels un pignon respectif (107, 119) est calé sur chacun des arbres (105, 117) montés chacun de façon à pouvoir tourner dans le carter de mécanisme d'entraînement d'essieu (101, 103) respectif et raccordés aux embrayages de direction (93, 95) correspondants ;

d) chaque carter de mécanisme d'entraînement d'essieu (101, 103) comporte un couvercle de montage (113, 125) fixé de façon amovible, qui permet, dans la position d'ouverture, de retirer les arbres (105, 117) précités avec le pignon (107, 119) précité ; et

e) chaque carter de mécanisme d'entraînement d'essieu (101, 103) comporte, en outre, un arbre mené qui est monté de façon à pouvoir tourner dans le carter d'entraînement d'essieu, qui fait saillie hors de celui-ci et qui est relié en rotation aux pignons (107, 129, 119, 131) du carter de mécanisme d'entraînement d'essieu.

8. Châssis de véhicule suivant l'une des revendications 4, 5, 6 et 7, caractérisé par les caractéristiques de la boîte de vitesses (45) suivantes :

a) l'arbre de sortie (51) supporte, dans une relation de calage angulaire, un premier pignon (271) et un second pignon (267) à l'intérieur du carter de boîte de vitesses (55), tandis que le pignon conique (85) calé angulairement sur l'arbre de sortie (51) est disposé à l'extérieur du carter de boîte de vitesses (55) devant sa paroi terminale avant (57) ;

b) un premier arbre de transmission (49) est monté de façon à pouvoir tourner dans la paroi terminale avant (57) et la paroi terminale arrière (67) du carter de boîte de vitesses (55), un troisième pignon (250) qui engrène de façon permanente avec le premier pignon (271) étant calé angulairement sur cet arbre, tandis que plusieurs quatrièmes pignons (245, 249) sont montés fous sur ledit arbre, l'un de ces pignons pouvant être accouplé sélectivement au premier arbre de transmission (49) par un premier embrayage (243) ;

c) un second arbre de transmission (47) est monté de façon à pouvoir tourner dans la paroi terminale avant (57) et la paroi terminale arrière (67) du carter de boîte de vitesses (55), cet arbre portant un cinquième pignon (260) calé angulairement sur lui, engrénant de façon permanente avec le second pignon (267), et plusieurs sixièmes pignons (255, 259) montés fous sur lui, parmi lesquels l'un peut être accouplé sélectivement par un second embrayage (253) au second arbre de transmission (47) ;

d) l'arbre de sortie (51), ainsi que les deux arbres de transmission (47, 49) sont parallèles entre eux et situés dans un plan horizontal commun ;

e) un arbre d'entrée (53) est monté de façon à pouvoir tourner dans la paroi terminale avant (57) et la paroi terminale arrière (67) du carter de boîte de vitesses (55), cet arbre portant un septième pignon (235) et un huitième pignon (239) montés fous sur lui, ces pignons pouvant être accouplés sélectivement par l'intermédiaire d'embrayages (233, 237) à l'arbre d'entrée (53) ;

f) un arbre de marche à vide (261) est immobilisé dans le carter de boîte de vitesses (55) et porte un neuvième pignon (263) monté fou sur lui, engrénant de façon permanente avec le huitième pignon (239) ;

g) un manchon (275) muni de plusieurs dixièmes pignons (277, 279) est monté fou sur l'arbre de sortie (51), chacun de ces pignons engrénant de façon permanente avec un pignon parmi les quatrièmes et sixièmes pignons (245, 249, 255, 259), tandis qu'en outre l'un deux (277) engrène de façon permanente avec le septième pignon (235) et que l'autre (279) engrène de façon permanente avec le neuvième pignon (263).

9. Châssis de véhicule suivant la revendication 6, 7 ou 8, caractérisé en ce que les orifices (135) prévus pour le liquide hydraulique dans la paroi supérieure du carter de châssis (33) sont reliés d'une part à une admission de liquide hydraulique et d'autre part à des raccords (133) prévus dans la paroi terminale arrière (67) du carter de boîte de vitesses (55), des conduits (137) qui en partent rejoignant par l'intermédiaire de répartiteurs (132, 134) les embrayages (233 à 257) et d'autres points de la boîte de vitesses (45), et en ce qu'un conduit de retour (143) s'étend du carter de boîte de vitesses (55) à la chambre centrale (B) du carter.

0 110 270

FIG. 1

FIG. 4

1

FIG. 2

FIG. 3

**FIG. 5**